# EUROPEAN PATENT APPLICATION

(11) **EP 4 653 681 A2**
(43) Date of publication of application: **26.11.2025**
(21) Application number: 25177672.0
(22) Date of filing: 20.05.2025
(51) Int. Cl.: F02C 3/113, B64D 27/33, F02C 7/36, F02K 5/00

(54) **DIFFERENTIAL GEARTRAIN FOR AIRCRAFT PROPULSION SYSTEM**

(30) Priority: 21.05.2024 US 202418670332
(71) Applicant: PRATT & WHITNEY CANADA CORP., Longueuil, Québec J4G 1A1 (CA)
(72) Inventor: VAN DEN ENDE, Daniel, (01BE5) Longueuil J4G 1A1 (CA); MENHEERE, Dave, (01BE5) Longueuil J4G 1A1 (CA)
(74) Representative: Dehns

(57) **Abstract**

An assembly is provided for an aircraft propulsion system (20). This assembly includes a geartrain (68), a propulsor rotor (40), a compressor rotor (41), a rotating structure (60) and an electric machine (24). The geartrain (68) includes a first component, a second component and a third component. The propulsor rotor (40) is coupled to the geartrain (68) through the first component. The compressor rotor (41) is coupled to the geartrain (68) through the second component. The rotating structure (60) is coupled to the geartrain (68) through the third component. The rotating structure (60) includes a turbine rotor (44). The electric machine (24) is positioned remote from the geartrain (68). The electric machine (24) includes an electric machine rotor (86), and the electric machine rotor (86) is coupled to the geartrain (68) through the third component.

## Description

### TECHNICAL FIELD

This disclosure relates generally to an aircraft propulsion system and, more particularly, to a gear arrangement for coupling rotating structures of the aircraft propulsion system.

### BACKGROUND INFORMATION

An aircraft propulsion system with a gas turbine engine may include a geartrain for coupling a turbine rotor to a propulsor rotor. Various geartrain arrangements are known in the art for coupling a turbine rotor to a propulsor rotor. While these known geartrain arrangements have various benefits, there is still room in the art for improvement.

### SUMMARY

According to an aspect of the present disclosure, an assembly is provided for an aircraft propulsion system. This assembly includes a geartrain, a propulsor rotor, a compressor rotor, a rotating structure and an electric machine. The geartrain includes a first component, a second component and a third component. The propulsor rotor is coupled to the geartrain through the first component. The compressor rotor is coupled to the geartrain through the second component. The rotating structure is coupled to the geartrain through the third component. The rotating structure includes a turbine rotor. The electric machine is positioned remote from the geartrain. The electric machine includes an electric machine rotor, and the electric machine rotor is coupled to the geartrain through the third component.

According to another aspect of the present disclosure, another assembly is provided for an aircraft propulsion system. This assembly includes a geartrain, a propulsor rotor, a compressor rotor, a power turbine rotating structure and an electric machine. The geartrain includes a first component, a second component and a third component. The propulsor rotor is coupled to the geartrain through the first component. The compressor rotor is coupled to the geartrain through the second component. The power turbine rotating structure is coupled to the geartrain through the third component. The power turbine rotating structure includes a power turbine rotor. The electric machine includes an electric machine rotor, and the electric machine rotor is coupled to the geartrain through the third component.

According to still another aspect of the present disclosure, another assembly is provided for an aircraft propulsion system. This assembly includes a geartrain, a propulsor rotor, a compressor rotor, a rotating structure and an electric machine. The geartrain includes a sun gear, a ring gear, a plurality of intermediate gears and a carrier. The ring gear circumscribes the sun gear. The intermediate gears are arranged in an array about the sun gear. Each of the intermediate gears is between and meshed with the sun gear and the ring gear. Each of the intermediate gears is rotatably mounted to the carrier. The propulsor rotor is coupled to the geartrain through the carrier. The compressor rotor is coupled to the geartrain through the sun gear. The rotating structure is coupled to the geartrain through the ring gear. The rotating structure includes a turbine rotor. The electric machine includes an electric machine rotor, and the electric machine rotor is coupled to the geartrain through the ring gear.

The following optional features may be applied to any of the above aspects.

The power turbine rotating structure may be decoupled from any compressor rotor between the power turbine rotor and the geartrain.

The rotating structure may be rotatable about an axis. The turbine rotor may be located between the electric machine and the geartrain along the axis.

The electric machine rotor may be rotatable about an axis. The electric machine may have an axial length. The electric machine may be spaced from the geartrain by a distance along the axis greater than the axial length.

The rotating structure may be configured to drive rotation of the propulsor rotor and the compressor rotor through the geartrain.

The rotating structure may be configured to drive rotation of the electric machine rotor independent of the geartrain.

The electric machine rotor may be configured to drive rotation of the rotating structure.

The electric machine rotor may be configured to drive rotation of the compressor rotor through the geartrain.

The geartrain may be configured as a differential geartrain.

The geartrain may be configured as an epicyclic geartrain.

The geartrain includes a sun gear, a ring gear circumscribing the sun gear, a plurality of intermediate gears and a carrier. The intermediate gears may be arranged circumferentially about the sun gear in an array. Each of the intermediate gears may be between and meshed with sun gear and the ring gear. The carrier may rotatably support the intermediate gears. Each of the first component, the second component and the third component may comprise a respective one of the sun gear, the ring gear or the carrier.

The first component may be configured as or otherwise include the carrier. The second component may be configured as or otherwise include the ring gear. The third component may be configured as or otherwise include the sun gear.

The first component may be configured as or otherwise include the carrier. The second component may be configured as or otherwise include the sun gear. The third component may be configured as or otherwise include the ring gear.

The electric machine rotor may be coupled to the third component through the rotating structure.

The propulsor rotor may be configured as or otherwise include a ducted fan rotor.

The rotating structure may be a power turbine rotating structure.

The rotating structure may be a low speed rotating structure. The compressor rotor may be a low pressure compressor rotor. The turbine rotor may be a low pressure turbine rotor. The assembly may also include a high speed rotating structure which includes a high pressure compressor rotor and a high pressure turbine rotor. The high speed rotating structure may be located between the low pressure turbine rotor and the geartrain.

The high speed rotating structure may not be coupled to a starter motor. In addition or alternatively, the high speed rotating structure may not be coupled to a tower shaft.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of an electric machine arranged with an engine rotating structure and an electrical power system.
FIG. 3A is a schematic illustration of a geartrain with a first arrangement of aircraft propulsion system rotating structures.
FIG. 3B is a schematic illustration of the geartrain arranged with a second arrangement of aircraft propulsion system rotating structures.

### DETAILED DESCRIPTION

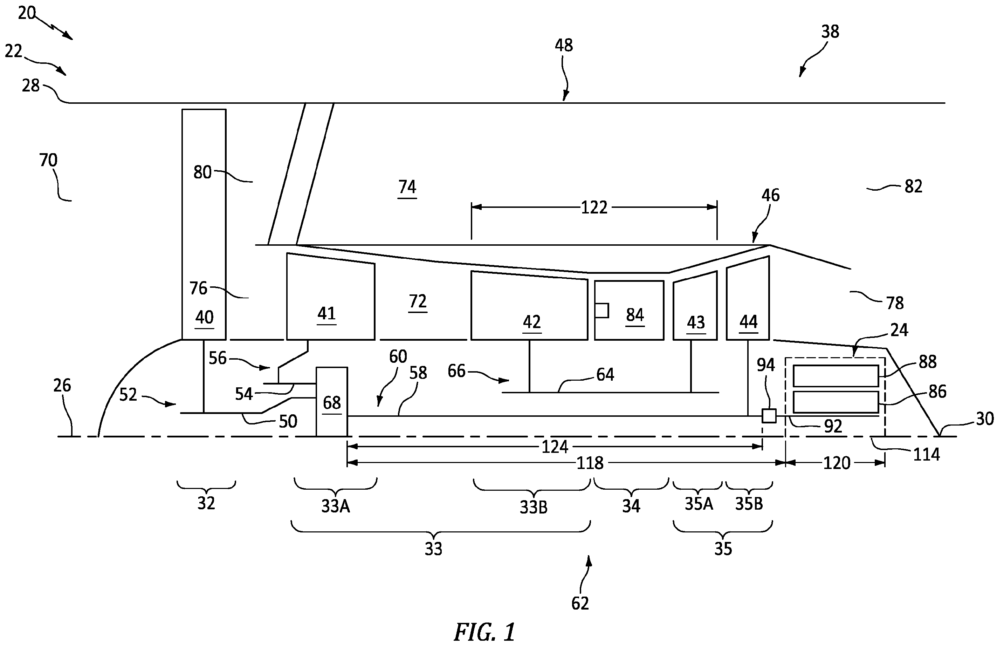

FIG. 1 illustrates a propulsion system 20 for an aircraft. The aircraft may be an airplane, a drone (e.g., an unmanned aerial vehicle (UAV)), or any other manned or unmanned aerial vehicle or system. The aircraft propulsion system 20 includes a gas turbine engine 22 and an electric machine 24. For ease of description, the aircraft propulsion system 20 is described below as a ducted rotor propulsion system such as a turbofan propulsion system, and the gas turbine engine 22 is described below as a turbofan engine. The present disclosure, however, is not limited to such exemplary aircraft propulsion system and/or gas turbine engine configurations.

The aircraft propulsion system 20 extends axially along an axis 26 from an upstream, forward end 28 of the aircraft propulsion system 20 to a downstream, aft end 30 of the aircraft propulsion system 20. Briefly, the axis 26 may be a centerline axis of the gas turbine engine 22 and/or one or more of its members. The axis 26 may also or alternatively be a rotational axis for one or more members of the gas turbine engine 22. The gas turbine engine 22 of FIG. 1 includes a propulsor section 32 (e.g., a fan section), a compressor section 33, a combustor section 34 and a turbine section 35. The compressor section 33 includes a low pressure compressor (LPC) section 33A and a high pressure compressor (HPC) section 33B, where the LPC section 33A of FIG. 1 is configured as a boost compressor section of the gas turbine engine 22. The turbine section 35 includes a high pressure turbine (HPT) section 35A and a low pressure turbine (LPT) section 35B.

The engine sections 32-35B and the electric machine 24 may be arranged sequentially along the axis 26 within a stationary structure 38 of the aircraft propulsion system 20; e.g., an engine housing. The propulsor section 32 includes a bladed propulsor rotor 40; e.g., a fan rotor. The LPC section 33A includes a bladed low pressure compressor (LPC) rotor 41. The HPC section 33B includes a bladed high pressure compressor (HPC) rotor 42. The HPT section 35A includes a bladed high pressure turbine (HPT) rotor 43. The LPT section 35B includes a bladed low pressure turbine (LPT) rotor 44. These engine rotor 40-44 are housed within the stationary structure 38. The stationary structure 38 of FIG. 1, for example, includes an inner structure 46 (e.g., a core case structure) and an outer structure 48 (e.g., a propulsor case structure). The inner structure 46 may house one or more of the engine sections 33A-35B and their engine rotors 41-44. The inner structure 46 may also house the electric machine 24. The outer structure 48 may house at least the propulsor section 32 and its propulsor rotor 40.

The propulsor rotor 40 of FIG. 1 is connected to and rotatable with a propulsor shaft 50; e.g., a fan shaft. At least (or only) the propulsor rotor 40 and the propulsor shaft 50 collectively form a propulsor rotating structure 52. This propulsor rotating structure 52 is rotatably supported by one or more bearings (not shown in FIG. 1), which bearings rotatably attach the propulsor rotating structure 52 to the stationary structure 38 and its inner structure 46. The propulsor rotating structure 52 is thereby rotatable about the axis 26, or another axis laterally offset from and/or angularly offset from the axis 26.

The LPC rotor 41 of FIG. 1 is connected to and rotatable with a compressor shaft 54. At least (or only) the LPC rotor 41 and the compressor shaft 54 collectively form a compressor rotating structure 56; e.g., a boost structure. This compressor rotating structure 56 is rotatably supported by one or more bearings (not shown in FIG. 1), which bearings rotatably attach the compressor rotating structure 56 to the stationary structure 38 and its inner structure 46. The compressor rotating structure 56 is thereby rotatable about the axis 26, or another axis laterally offset from and/or angularly offset from the axis 26.

The LPT rotor 44 of FIG. 1 is connected to and rotatable with a low speed shaft 58. At least (or only) the LPT rotor 44 and the low speed shaft 58 collectively form a low speed rotating structure 60; e.g., a power turbine / free turbine rotating structure of a core 62 of the gas turbine engine 22. Briefly, the engine core 62 of FIG. 1 includes at least (or only) the HPC section 33B, the combustor section 34, the HPT section 35A and the LPT section 35B. The low speed rotating structure 60 is rotatably supported by one or more bearings (not shown in FIG. 1), which bearings rotatably attach the low speed rotating structure 60 to the stationary structure 38 and its inner structure 46. The low speed rotating structure 60 is thereby rotatable about the axis 26, or another axis laterally offset from and/or angularly offset from the axis 26.

The low speed rotating structure 60 of FIG. 1 is operatively coupled to each of (a) the propulsor rotating structure 52 and its propulsor shaft 50 and (b) the compressor rotating structure 56 and its LPC rotor 41 through a differential geartrain 68 as described below in further detail. The propulsor rotor 40 and the LPC rotor 41 are thereby operable to rotate at a different (e.g., slower) rotational speed about the axis 26 than the LPT rotor 44. Moreover, the propulsor rotor 40 is operable to rotate at a different rotational speed about the axis 26 than the LPC rotor 41.

The HPC rotor 42 is coupled to and rotatable with the HPT rotor 43. The HPC rotor 42 of FIG. 1, for example, is connected to the HPT rotor 43 through a high speed shaft 64. At least (or only) the HPC rotor 42, the HPT rotor 43 and the high speed shaft 64 collectively form a high speed rotating structure 66; e.g., a high speed spool of the engine core 62. The high speed rotating structure 66 is rotatably supported by one or more bearings (not shown in FIG. 1), which bearings rotatably attach the high speed rotating structure 66 to the stationary structure 38 and its inner structure 46. The high speed rotating structure 66 is thereby rotatable about the axis 26, or another axis laterally offset from and/or angularly offset from the axis 26.

The high speed rotating structure 66 of FIG. 1 and its members 42, 43 and 64 are arranged axially between the geartrain 68 and the LPT rotor 44. The low speed shaft 58 of FIG. 1, for example, projects axially through a bore of the high speed rotating structure 66 and its members 42, 43 and 64 from the LPT rotor 44 to the geartrain 68. The low speed rotating structure 60 of FIG. 1 and its members 44 and 58 are arranged axially between the geartrain 68 and the electric machine 24. The geartrain 68 of FIG. 1 is arranged axially between (a) the low speed rotating structure 60 and its members 44 and 58 and (b) the propulsor rotating structure 52 and its members 40 and 50. The geartrain 68 of FIG. 1 is also arranged axially between (a) the low speed rotating structure 60 and its members 44 and 58 and (b) the compressor shaft 54. The LPC rotor 41, however, may be located radially outboard of, axially overlap and circumscribe the geartrain 68. The geartrain 68 of FIG. 1 may thereby be located within an inner bore of the compressor rotating structure 56 and its LPC rotor 41.

During turbine engine operation, air enters the aircraft propulsion system 20 and its gas turbine engine 22 through an airflow inlet 70. This air is directed across the propulsor section 32 and into a (e.g., annular) core flowpath 72 and a (e.g., annular) bypass flowpath 74. The core flowpath 72 extends sequentially through the LPC section 33A, the HPC section 33B, the combustor section 34, the HPT section 35A and the LPT section 35B from an airflow inlet 76 into the core flowpath 72 to a combustion products exhaust 78 out from the core flowpath 72 and the engine core 62. The air entering the core flowpath 72 may be referred to as "core air". The bypass flowpath 74 extends through a (e.g., annular) bypass duct from an airflow inlet 80 into the bypass flowpath 74 to an airflow exhaust 82 out from the bypass flowpath 74. This bypass flowpath 74 and its bypass duct bypass (e.g., are disposed radially outboard of and extend along) the engine core 62 and the inner structure 46. The air entering the bypass flowpath 74 may be referred to as "bypass air".

The core air is compressed by the LPC rotor 41 and the HPC rotor 42 and is directed into a (e.g., annular) combustion chamber 84 of a (e.g., annular) combustor in the combustor section 34. Fuel is injected into the combustion chamber 84 and mixed with the compressed core air to provide a fuel-air mixture. This fuel-air mixture is ignited and combustion products thereof flow through and sequentially drive rotation of the HPT rotor 43 and the LPT rotor 44 about the axis 26. The rotation of the HPT rotor 43 and the LPT rotor 44 respectively drive rotation of the HPC rotor 42 and the LPC rotor 41 about the axis 26 and, thus, compression of the air received from the core inlet 76. The rotation of the LPT rotor 44 also drives rotation of the propulsor rotor 40. The rotation of the propulsor rotor 40 propels the bypass air through and out of the bypass flowpath 74. The propulsion of the bypass air may account for a majority of thrust generated by the gas turbine engine 22, e.g., more than seventy-five percent (75%) of engine thrust. The gas turbine engine 22 of the present disclosure, however, is not limited to the foregoing exemplary thrust ratio.

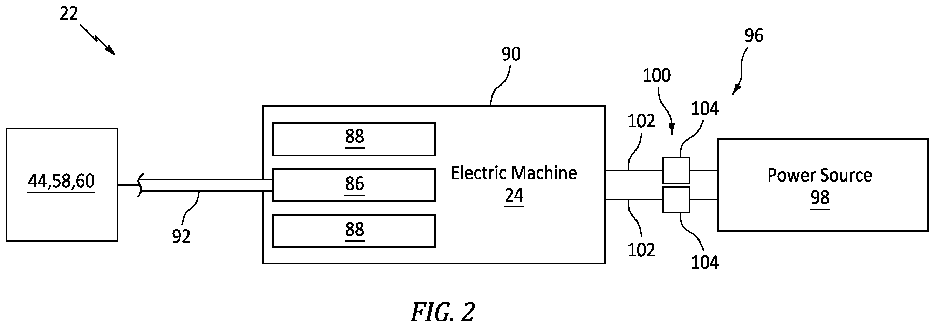

Referring to FIG. 2, the electric machine 24 includes an electric machine rotor 86, an electric machine stator 88 and an electric machine housing 90. The machine rotor 86 is rotatable about a rotational axis of the machine rotor 86, which rotational axis may also be an axial centerline of the electric machine 24 and may (or may not) be coaxial with the axis 26 (see FIG. 1). The machine stator 88 of FIG. 2 is radially outboard of and circumscribes the machine rotor 86. With this arrangement, the electric machine 24 is configured as a radial flux electric machine 24. The electric machine 24 of the present disclosure, however, is not limited to such an exemplary rotor-stator configuration nor to radial flux arrangements. The machine rotor 86, for example, may alternatively be radially outboard of and circumscribe the machine stator 88. In another example, the machine rotor 86 may be axially next to the machine stator 88 configuring the electric machine 24 as an axial flux electric machine. Referring again to FIG. 2, the machine rotor 86 and the machine stator 88 are at least partially or completely housed within the machine housing 90.

The machine rotor 86 of FIG. 1 is connected to and rotatable with an electric machine shaft 92. At least (or only) the machine rotor 86 and the machine shaft 92 collectively form an electric machine rotating structure. The machine shaft 92 couples the machine rotating structure and its machine rotor 86 to the low speed rotating structure 60 and its low speed shaft 58. The machine shaft 92 of FIG. 1, for example, is (e.g., directly) connected to the low speed shaft 58 through an inter-shaft coupling 94 (e.g., a compliant joint) at, for example, an axial forward end of the machine shaft 92 and/or an axial aft end of the low speed shaft 58. The machine rotor 86 may thereby be coupled to the low speed rotating structure 60 independent of the geartrain 68. The machine rotating structure and its machine rotor 86 of FIG. 1, however, are operatively coupled to (a) the propulsor rotating structure 52 and its propulsor rotor 40 and/or (b) the compressor rotating structure 56 and its LPC rotor 41 through the geartrain 68 as described below in further detail.

The electric machine 24 may be configurable as an electric motor and/or an electric generator. During a motor mode of operation, the electric machine 24 may operate as the electric motor to convert electricity received from an electrical power system 96 (see FIG. 2) into mechanical power. The machine stator 88, for example, may generate an electromagnetic field with the machine rotor 86 using the electricity. This electromagnetic field may drive rotation of the machine rotor 86. The machine rotor 86 may thereby drive rotation of the low speed rotating structure 60. For example, during initial turbine engine startup, the rotation of the machine rotor 86 may completely drive rotation of the low speed rotating structure 60 and, thus, may completely drive rotation of at least the LPC rotor 41 through the geartrain 68 as described below in further detail. Here, the electric machine 24 may completely mechanically power operation of at least the LPC section 33A. By contrast, during the turbine engine operation as described above (e.g., during aircraft flight), the rotation of the LPT rotor 44 paired with the rotation of the machine rotor 86 collectively drive rotation of the low speed rotating structure 60 and, thus, collectively drive rotation of the propulsor rotor 40 and the LPC rotor 41 through the geartrain 68. Here, the electric machine 24 may boost mechanical power provided by the LPC section 33A to the propulsor section 32 and the LPC section 33A.

During a generator mode of operation, the electric machine 24 may operate as the electric generator to convert mechanical power received from, for example, the LPC section 33A into electricity. The LPC rotor 41, for example, may drive rotation of the machine rotor 86 through the inter-shaft coupling 94 and, thus, independent of the geartrain 68. The rotation of the machine rotor 86 may generate an electromagnetic field with the machine stator 88, and the machine stator 88 may convert energy from the electromagnetic field into electricity. The electric machine 24 may then provide this electricity to the power system 96 (see FIG. 2) for further use and/or storage. However, in other embodiments, the electric machine 24 may alternatively be configured as a dedicated electric motor (e.g., without the electric generator functionality) or a dedicated electric generator (e.g., without the electric motor functionality).

Referring to FIG. 2, the power system 96 includes an electrical power source 98 and electrical circuitry 100 (e.g., a power bus) which electrically couples the power source 98 to the electric machine 24 and its machine stator 88. The power source 98 is configured to store electricity. The power source 98 is also configured to provide the stored electricity to the electric machine 24 and/or receive electricity from the electric machine 24; e.g., during recharging. The power source 98, for example, may be configured as or otherwise include one or more electricity storage devices; e.g., batteries, battery banks, etc. The electrical circuitry 100 may include one or more electrical leads 102 (e.g., high voltage lines) and one or more electrical devices 104 for conditioning, metering, regulating and/or otherwise controlling electrical power transfer between the electric machine 24 and the power source 98. Examples of the electrical devices 104 include, but are not limited to, switches, current regulators, converters and buffers.

The geartrain 68 of FIG. 1 provides an open power differential between an input and multiple outputs. As described above, the input may be the LPT rotor 44 and/or the machine rotor 86. The first output may be the propulsor rotor 40. The second output may be the LPC rotor 41. With this arrangement, the aircraft propulsion system 20 may operate in various modes such as, but not limited to, an engine startup mode and an engine operating mode.

Prior to the engine startup mode when the aircraft propulsion system 20 is (e.g., completely) non-operational / turned off, each of the turbine engine rotors 40-44 may be stationary. Due to a size differential, a mass differential, a propulsive airflow differential, etc., the propulsor rotor 40 of FIG. 1 is associated with a significantly larger inertial parameter than the LPC rotor 41. Thus, when the electric machine 24 is energized and operated as the electric motor during the engine startup mode to facilitate the initial turbine engine startup, the rotation of the machine rotor 86 may (at least initially) drive rotation of the LPC rotor 41 through the geartrain 68 without (or while minimally) also driving rotation of the propulsor rotor 40. Substantially all of the power (minus losses) output by the electric machine 24 may thereby be used for rotating the LPC rotor 41. Note, if the electric machine 24 also needed to rotate the relatively high inertia propulsor rotor 40 for the initial turbine engine startup, then a size (e.g., power output) of the electric machine 24 would need to be significantly increased, which would in turn increase a size, a mass and/or a cost of the electric machine 24.

During the engine operating mode (e.g., after the gas turbine engine 22 has already been started and is fully operational), the rotation of the LPT rotor 44 drives rotation of both the propulsor rotor 40 and the LPC rotor 41 through the geartrain 68. Substantially all of the power (minus losses) output by the LPT rotor 44 may thereby be used for rotating both the propulsor rotor 40 and the LPC rotor 41. Here, the geartrain 68 facilitates a power transfer balance between the propulsor rotor 40 and the LPC rotor 41. Of course, it is also contemplated the power output by the LPT rotor 44 may be boosted by the electric machine 24 when operating as the electric motor.

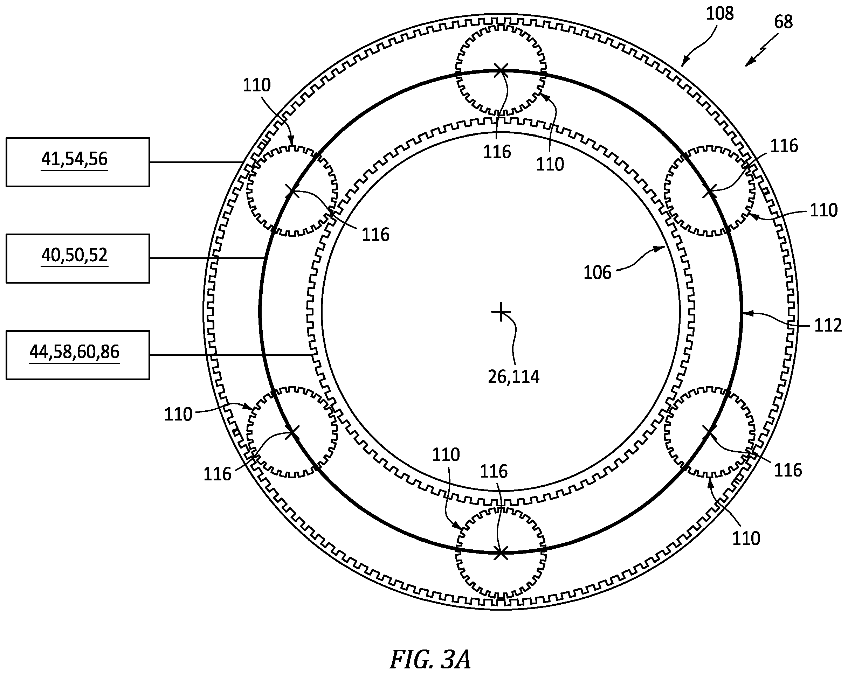

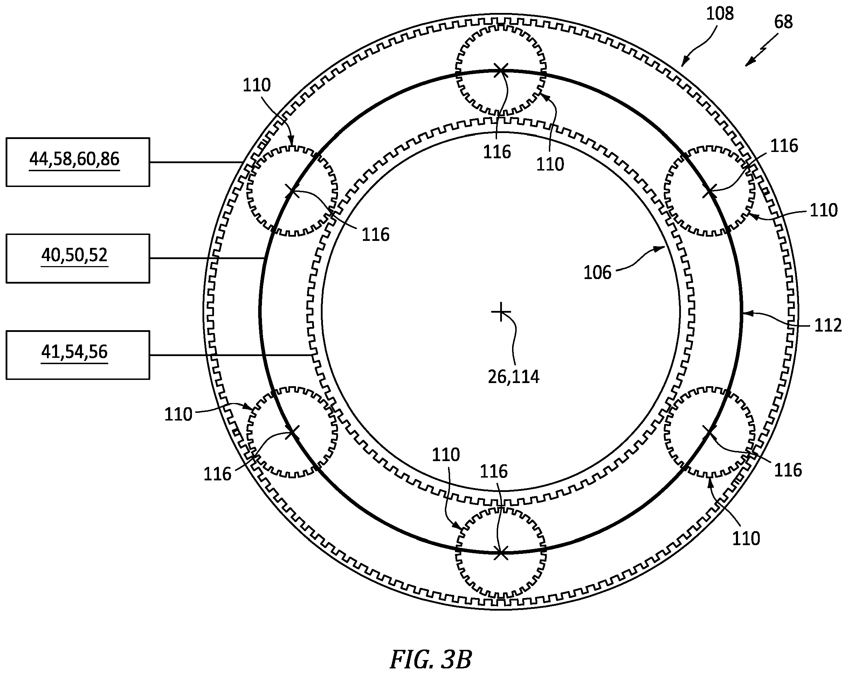

The geartrain 68 may be configured as an open epicyclic geartrain. The geartrain 68 of FIGS. 3A and 3B, for example, includes a sun gear 106 (e.g., an inner gear), a ring gear 108 (e.g., an annular outer gear), one or more intermediate gears 110 (e.g., planet or star gears) and a gear carrier 112. The sun gear 106 is rotatable about a centerline axis 114 of the geartrain 68, which centerline axis 114 may be parallel (e.g., coaxial) with the axis 26. The ring gear 108 is rotatable about the centerline axis 114. The ring gear 108 extends circumferentially around (e.g., circumscribes) the sun gear 106 and an annular array of the intermediate gears 110. The intermediate gears 110 are arranged circumferentially about the centerline axis 114 in the annular array. Each of the intermediate gears 110 is radially between and meshed with the sun gear 106 and the ring gear 108. Each of the intermediate gears 110 is rotatably supported by (e.g., rotatably attached to) the gear carrier 112. Each of the intermediate gears 110 is thereby rotatable about a rotational axis 116 of that respective intermediate gear 110. The gear carrier 112 and, thus, the array of the intermediate gears 110 are rotatable about the centerline axis 114.

In some embodiments, referring to FIG. 3A, the low speed rotating structure 60 is coupled to the sun gear 106. The LPT rotor 44 and the machine rotor 86 are thereby coupled to the geartrain 68 through the sun gear 106. The propulsor rotating structure 52 is coupled to the gear carrier 112. The propulsor rotor 40 is thereby coupled to the geartrain 68 through the gear carrier 112. The compressor rotating structure 56 is coupled to the ring gear 108. The LPC rotor 41 is thereby coupled to the geartrain 68 through the ring gear 108. The present disclosure, however, is not limited to such an exemplary arrangement. For example, referring to FIG. 3B, the low speed rotating structure 60 is coupled to the ring gear 108. The LPT rotor 44 and the machine rotor 86 are thereby coupled to the geartrain 68 through the ring gear 108. The propulsor rotating structure 52 is coupled to the gear carrier 112. The propulsor rotor 40 is thereby coupled to the geartrain 68 through the gear carrier 112. The compressor rotating structure 56 is coupled to the sun gear 106. The LPC rotor 41 is thereby coupled to the geartrain 68 through the sun gear 106.

Referring to FIG. 1, the electric machine 24 may be positioned remote from the geartrain 68. The electric machine 24 of FIG. 1, for example, is spaced from the geartrain 68 by an axial distance 118 along the axis 26. This axial distance 118 may be greater than, for example, an axial length 120 of the geartrain 68, an axial length 122 of the high speed rotating structure 66, and/or an axial length 124 of the low speed rotating structure 60. The electric machine 24 of FIG. 1, for example, may be arranged at or near the propulsion system aft end 30, for example aligned with or axially near the core exhaust 78. Such an arrangement is in contrast to alternative arrangements where the electric machine 24 is nested with, axially overlapped by and/or otherwise positioned close to the geartrain 68. The electric machine 24 of the present disclosure, however, is not limited to such an exemplary aft position.

In some embodiments, by using the electric machine 24 for the turbine engine startup, the aircraft propulsion system 20 may be configured without an electric motor or other drive unit coupled to the high speed rotating structure 66 for turbine engine startup. The high speed rotating structure 66 may thereby be configured without any tower shaft coupled thereto. This may reduce aircraft propulsion system complexity, mass and cost as well as increase high speed rotating structure efficiency by reducing rotating structure losses, etc.

In some embodiments, the low speed rotating structure 60 may be decoupled from any compressor rotors between the LPT rotor 44 and the geartrain 68. The low speed rotating structure 60 of FIG. 1, for example, is configured as the power turbine rotating structure and its LPT rotor 44 is configured as the PT rotor. With this arrangement, the LPT rotor 44 of FIG. 1 may only drive rotation of the engine rotors 40 and 41 through the geartrain 68 and, when operated as the electric generator, rotation of the machine rotor 86. The present disclosure, however, is not limited to such an exemplary arrangement. For example, in other embodiments, it is contemplated the low speed rotating structure 60 may also include a compressor rotor (e.g., an intermediate pressure compressor (IPC) rotor) connected to the low speed shaft 58 axially aft of the geartrain 68 and upstream of the HPC rotor 42 along the core flowpath 72.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system (20), comprising:
a geartrain (68) including a first component, a second component and a third component;
a propulsor rotor (40) coupled to the geartrain (68) through the first component;
a compressor rotor (41) coupled to the geartrain (68) through the second component;
a rotating structure (60) coupled to the geartrain (68) through the third component, the rotating structure (60) comprising a turbine rotor (44); and
an electric machine (24) positioned remote from the geartrain (68) and comprising an electric machine rotor (86), the electric machine rotor (86) coupled to the geartrain (68) through the third component.

2. The assembly of claim 1, wherein:
the rotating structure (60) is rotatable about an axis (26); and
the turbine rotor (44) is located between the electric machine (24) and the geartrain (68) along the axis (26).

3. The assembly of claim 1 or 2, wherein:
the electric machine rotor (86) is rotatable about an axis (26);
the electric machine (24) has an axial length (120); and
the electric machine (24) is spaced from the geartrain (68) by a distance along the axis (26) greater than the axial length (120).

4. The assembly of claim 1, 2 or 3, wherein the rotating structure (60) is configured to drive rotation of the propulsor rotor (40) and the compressor rotor (41) through the geartrain (68).

5. The assembly of any preceding claim, wherein the rotating structure (60) is configured to drive rotation of the electric machine rotor (86) independent of the geartrain (68).

6. The assembly of any preceding claim, wherein:
the electric machine rotor (86) is configured to drive rotation of the rotating structure (60); and/or
the electric machine rotor (86) is configured to drive rotation of the compressor rotor (41) through the geartrain (68).

7. The assembly of any preceding claim, wherein:
the geartrain (68) is configured as a differential geartrain; and/or
the geartrain (68) is configured as an epicyclic geartrain.

8. The assembly of any preceding claim, wherein the geartrain (68) includes:
a sun gear (106);
a ring gear (108) circumscribing the sun gear (106);
a plurality of intermediate gears (110) arranged circumferentially about the sun gear (106) in an array, each of the plurality of intermediate gears (110) between and meshed with sun gear (106) and the ring gear (108); and
a carrier (112) rotatably supporting the plurality of intermediate gears (110);
each of the first component, the second component and the third component comprising a respective one of the sun gear (106), the ring gear (108) or the carrier (112).

9. The assembly of claim 8, wherein:
the first component comprises the carrier (112);
the second component comprises the ring gear (108); and
the third component comprises the sun gear (106).

10. The assembly of claim 8, wherein:
the first component comprises the carrier (112);
the second component comprises the sun gear (106); and
the third component comprises the ring gear (108).

11. The assembly of any preceding claim, wherein the electric machine rotor (86) is coupled to the third component through the rotating structure (60).

12. The assembly of any preceding claim, wherein:
the propulsor rotor (40) comprises a ducted fan rotor; and/or
the rotating structure (60) is a power turbine rotating structure.

13. The assembly of any preceding claim, wherein the rotating structure (60) is a low speed rotating structure, the compressor rotor (41) is a low pressure compressor rotor, the turbine rotor (44) is a low pressure turbine rotor, and the assembly further comprises:
a high speed rotating structure (66) including a high pressure compressor rotor (42) and a high pressure turbine rotor (43); and
the high speed rotating structure (66) is located between the low pressure turbine rotor (41) and the geartrain (68),
wherein, optionally, at least one of:
the high speed rotating structure (66) is not coupled to a starter motor; or
the high speed rotating structure (66) is not coupled to a tower shaft.

14. An assembly for an aircraft propulsion system (20), comprising:
a geartrain (68) including a first component, a second component and a third component;
a propulsor rotor (40) coupled to the geartrain (68) through the first component;
a compressor rotor (41) coupled to the geartrain (68) through the second component;
a power turbine rotating structure (60) coupled to the geartrain (68) through the third component, the power turbine rotating structure (60) comprising a power turbine rotor (44); and
an electric machine (24) comprising an electric machine rotor (86), the electric machine rotor (86) coupled to the geartrain (68) through the third component,
wherein, optionally, the power turbine rotating structure (60) is decoupled from any compressor rotor between the power turbine rotor (44) and the geartrain (68).

15. An assembly for an aircraft propulsion system (20), comprising:
a geartrain (68) including a sun gear (106), a ring gear (108), a plurality of intermediate gears (110) and a carrier (112), the ring gear (108) circumscribing the sun gear (106), the plurality of intermediate gears (110) arranged in an array about the sun gear (106), each of the plurality of intermediate gears (110) between and meshed with the sun gear (106) and the ring gear (108), and each of the plurality of intermediate gears (110) rotatably mounted to the carrier (112);
a propulsor rotor (40) coupled to the geartrain (68) through the carrier (112);
a compressor rotor (41) coupled to the geartrain (68) through the sun gear (106);
a rotating structure (60) coupled to the geartrain (68) through the ring gear (108), the rotating structure (60) comprising a turbine rotor (44); and
an electric machine (24) comprising an electric machine rotor (86), the electric machine rotor (86) coupled to the geartrain (68) through the ring gear (108).
